# EUROPEAN PATENT SPECIFICATION

(11) **EP 1 022 725 B1**
(45) Date of publication and mention of the grant of the patent: **06.04.2005**
(21) Application number: 99100951.5
(22) Date of filing: 20.01.1999
(51) Int. Cl.: G10L 17/00, G10L 15/06

(54) **Selection of acoustic models using speaker verification**
Auswahl akustischer Modelle mittels Sprecherverifizierung
Sélection des modèles acoustiques utilisant de la vérification de locuteur

(43) Date of publication of application: 26.07.2000
(73) Proprietor: Sony International (Europe) GmbH, 10785 Berlin (DE)
(72) Inventor: Goronzy, Silke c/o Sony Int. (Europe) GmbH, 70736 Fellbach (DE); Buchner, Peter c/o Sony Int. (Europe) GmbH, 70736 Fellbach (DE); Kompe, Ralf c/o Sony Int. (Europe) GmbH, 70736 Fellbach (DE)
(74) Representative: Müller - Hoffmann & Partner

(56) References cited:
- WO-A-96/22514
- REYNOLDS ET AL.: "Integration of speaker and speech recognition systems" INTERNATIONAL CONFERENCE ON ACOUSTICS, SPEECH AND SIGNAL PROCESSING (ICASSP 1991), vol. 2, 14 - 17 May 1991, pages 869-872, XP000222216 TORONTO, CA ISBN: 0-7803-0003-3
- QUIANG HUO; CHORKIN CHAN: 'On-line Bayes adaptation of SCHMM parameters for speech recognition' IEEE INT. CONF. ON ACOUSTICS, SPEECH AND SIGNAL PROCESSING vol. 1, 09 May 1995 - 12 May 1995, DETROIT, MI, USA, pages 708 - 711

## Description

This invention is related to a method and a device to perform automatic speech recognition, in particular to a method and a device to increase the recognition rate in speech recognition systems that are used by different users.

State of the art speech recognizers consist of a set of statistical distribustions modeling the acoustic properties of certain speech segments. These acoustic properties are encoded in feature vectors. As an example, one Gaussian distribution can be taken for each phoneme. These distributions are attached to states. A (stochastic) state transition network (usually hidden Markov models) defines the probabilities for sequences of states and sequences of feature vectors. Passing a state consumes one feature vector covering a frame of e.g. 10 ms of the speech signal.

The stochastic parameters of such a recognizer are trained using a large amount of speech data either from a single speaker yielding a speaker dependent (SD) system or from many speakers yielding a speaker independent (SI) system.

Speaker adaptation (SA) is a widely used method to increase recognition rates of SI systems. State of the art speaker dependent systems yield much higher recognition rates than speaker independent systems. However, for many applications, it is not feasible to gather enough data from a single speaker to train the system. In case of a consumer device this might even not be wanted. To overcome this mismatch in recognition rates, speaker adaptation algorithms are widely used in order to achieve recognition rates that come close to speaker dependent systems, but only use a fraction of speaker dependent data compared to speaker dependent ones. These systems initially take speaker independent models that are then adapted so as to better match the speakers acoustics.

Usually, the adaptation is performed in supervised mode. That is the spoken words are known and the recognizer is forced to recognize them. Herewith a time alignment of the segment-specific distributions is achieved. The mismatch between the actual feature vectors and the parameters of the corresponding distribution builds the basis for the adaptation. The supervised adaptation requires an adaptation session to be done with every new speaker before he/she can actually use the recognizer.

Usually, the speaker adaptation techniques modify the parameters of the hidden Markov models so that they better match the acoustic characteristics of new speakers. Normally, in batch or off-line adaptation a speaker has to read a pre-defined text before he/she can use the system for recognition, which is then processed to do the adaptation. Once this is finished the system can be used for recognition. This mode is also called supervised adaptation, since the text was known to the system and a forced alignment of the corresponding speech signal to the models corresponding to the text is performed and used for adaptation.

However, an unsupervised or on-line method is better suited for most kinds of consumer devices. In this case, adaptation takes place while the system is in use. The recognized utterance is used for adaptation and the modified models are used for recognizing the next utterance and so on. In this case the spoken text is not known to the system, but the word(s) that were recognized are taken instead.

An adapatation of the speaker adapted model set can be repreatedly performed to further improve the performance of specific speakers. There are several existing methods for speaker adaptation, e.g. maximum a posteriori adaptation (MAP) or maximum likelihood linear regression (MLLR) adaptation.

However, these speaker adaptive speech recognition systems, especially systems working with unsupervised adaptation, are always adaptated to one speaker only. Therefore, if the speaker changes, adaptation has to be restarted (using the SI models) for this new speaker before he/she can use the system with an improved recognition rate.

Speaker adaptation techniques are widely used in many kinds of speech recognition systems, e.g. dictation systems. In some of these systems it is possible to store the speaker adapted models, so that different speakers can use the system with different speaker adapted models. But each time it has to be specified manually which of the adapted models to use.

On the other hand, it is known that speaker verification and identification techniques are used for access control of e.g. buildings or systems.

In "Integration of speaker and speech recognition systems" by D. A. Reynolds and L. P. Heck, International Conference On Acousticts. Speech and Signal Processing, 1991, a combination of a high-performance speaker identification system and an isolated word recognizer is presented. Thereby, the front and text independent speaker identification system determines the most likely speaker for an input word. The speaker identity is then used to chose the reference word models for the speech recognizer. For an open set of speakers, the speaker recognition system acts as a "speaker quantizer" which associates the unknown speaker with an acoustically similar speaker.

In WO 96/22514, a method and apparatus for automatic recognition of speech is presented that adapts to a particular speaker by using adaptation data to develop a transformation through which speaker independent models are transformed into speaker adapted models. The speaker adapted models are then used for speaker recognition.

A further prior art document is "On-line Bayes adaption of SCHMM parameters for speech recognition" by Qiang Huo and Chorkin Chan, International Conference on Acoustics, Speech and Signal Processing, 1995. In this prior art document, an on-line adaptation of semi-continuous hidden Markov model (SCHMM) is studied.

Therefore, it is the object underlying the present invention to propose a method and a device for speaker adaptation that overcomes the problems described above.

The inventive method is defined in independent claim 1 and the inventive device is defined in independent claim 5. Preferred embodiments thereof are respectively defined in the respective following dependent claims.

As mentioned above, according to the prior art adaptation has to be restarted using the speaker independent (SI) models again if there is change in speaker.

When talking about a home or car environment there will be a change in speaker quite often, but it will be a more or less fixed set of speakers, e.g. the members of a family. So it is not very reasonable to start adaptation all over again every time one of the speakers starts using the system and discard all previous adaptation to specific speakers.

According to the present invention, on the other hand, the system recognizes the speaker, and if adaptation has already been conducted for that speaker, the models already existing will be used for further adaptation. Speaker verification techniques are used for recognizing who is speaking.

According to the present invention this change in speaker is detected automatically. Therefore, in a networked system that is mainly used by the same persons, but with a frequent change between them, the speech recognition system according to the present invention does not restart the adaptation to a different speaker every time the speaker changes, but it first checks the identity of the speaker, so that the system can switch to an adapted model set for this particular speaker, if it exists. In this case, said model set is stored and used for recognition and further adaptation. Together with the speaker adapted model set, the statistical hyper parameters necessary for the adaptation are stored so that the adaptation can continue and does not have to be restarted when the same speaker uses the system again. Such hyper parameters could e.g. be weights that determine the adaptation speed to adapt a certain speaker adapted model set to the corresponding speaker. If no model set exists for this particular speaker, a new one will be built using adaptation starting with the SI models.

The method and device according to the present invention will be better understood from the following detailed description of an exemplary embodiment thereof taken in conjunction with the appended drawings, wherein:
- **Figure 1**: shows a speech recognition system according to the present invention using speaker adaptation and automatic identification of the speaker; and
- **Figure 2**: shows the verification and adaptation procedure performed according to the present invention.

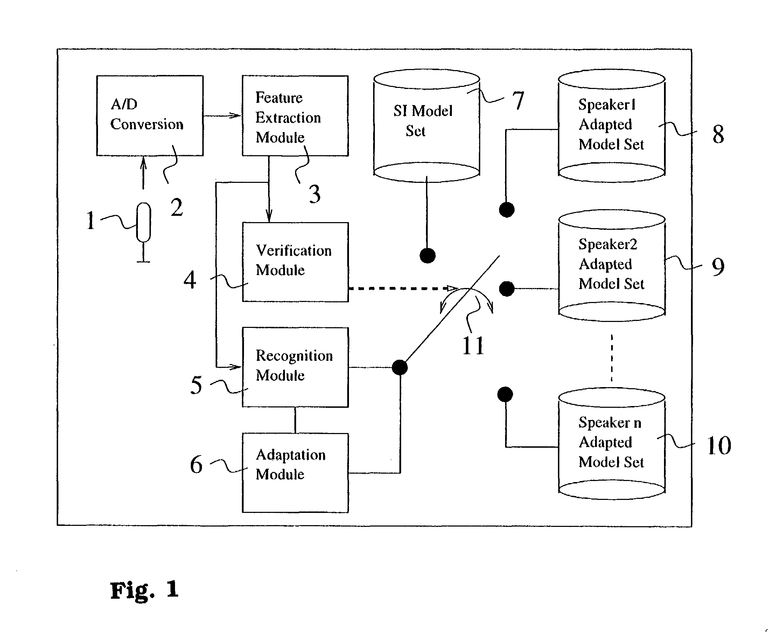

Figure 1 only shows the part of the automatic speech recognition system according to the present invention that is used for speaker adaptation and automatic identification of the speaker.

The analogue speech signal generated by a microphone 1 is converted into a digital signal in an A/D conversion stage 2 before a feature extraction is performed by a feature extraction module 3 to obtain a feature vector, e.g. every 10 ms. This feature vector is fed into a verification module 4 and a recognition module 5. In the verification module 4 an automatic identification of the speaker is performed, as described above. In the recognition module 5 recognition of the spoken utterance is performed on basis of the extracted feature vectors and a set of HMM models. The recognition module 5 also feeds the recognition result to an adaptation module 6 that can adapt a certain HMM model set to a certain speaker.

The HMM model set to be accessed or adapted by the recognition module 5 or the adaptation module 6 is selected by the verification module 4 from a speaker independent model set or one of several sets of speaker adapted model sets that are respectively adapted to different individual speakers. These different model sets are stored in storages 7, 8, 9 and 10 and selected via a switch 11 that has its fixed terminal connected to the recognition module 5 and the adaptation module 6 and the movable terminal dependent on a control signal that is received from the verification module 4 to one of the model sets described before.

It is also possible that the speaker adapted model sets are not adaptated to individual speakers, but to individual groups of speakers, such as Germans, British people, Germans speaking English, American people and so on or people speaking different dialects. These groups can also be identified automatically according to well known language or dialect identification algorithms working directly on the speech signal.

Of course, instead of the switch 11 a different solution having the same function can be selected.

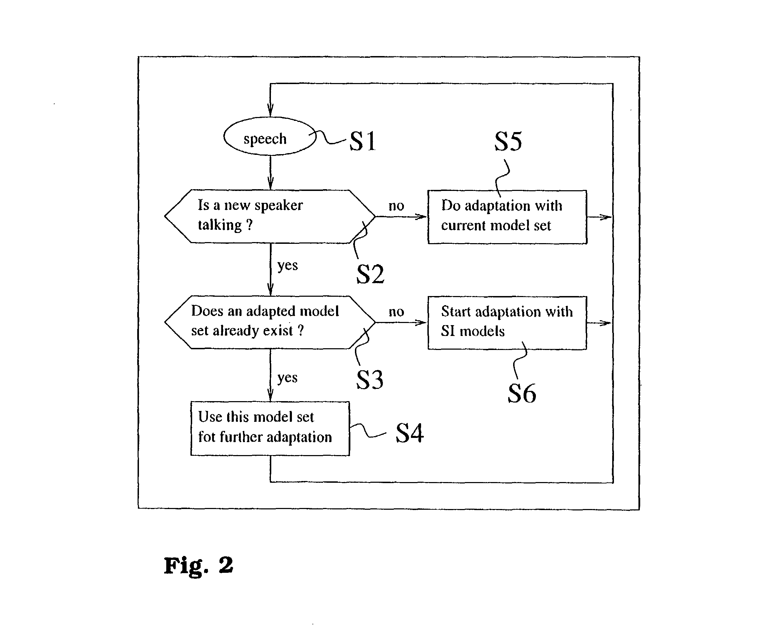

Figure 2 shows the verification and adaptation procedure performed in the recognition system according to the present invention. In a first step S1 a spoken utterance of a user is received, A/D converted and further processed to extract the feature vectors. Thereafter, it is checked in a step S2 whether a new speaker is talking or not. If a new speaker is talking, it is checked in step S3 whether an adapted model set already exists for this speaker or not. If an adapted model set already exists this model set is used for further adaptation in a step S4, whereafter the next spoken utterance is processed in step S1 and the whole procedure is repeated therewith.

If no adapted model set exists in step S3, adaptation with the speaker independent model is started in step S6 and a new model set (speaker adapted) is added to the system, whereafter the next utterance is processed in step S1 and the whole process will be repeated with his next utterance. If it is determined in step S2 that no new speaker is talking, the adaptation will be done with the current model set in step S5, whereafter the next spoken utterance is processed in step S1 and the whole procedure will be repeated with this next utterance.

## Claims

1. Method to perform an automatic speech recognition, **characterized by**
- detecting a change of the speaker automatically;
- identifying a speaker; and
- using an individual model set adapted to the identified speaker for the speech recognition procedure, if said individual model set is available,
- otherwise, newly generating such an individual speaker adapted model set for said speaker and
- adding a respective new model set to the system,
- wherein the newly generated individual speaker adapted model set is generated on basis of a speaker independent model.

2. Method according to claim 1, **characterized by**
- switching to an adapted individual model set for the identified speaker, it it exists, and
- further adapting the respective adapted individual model set for the identified speaker.

3. Method according to claim 1 or 2, **characterized by**
- storing hyper parameters together with said individual model set for a particular speaker, wherein said hyper parameters are necessary for the adaptation, so that the adaptation can continue and does not have to be restarted when the same speaker uses the system again,
- adapting said individual speaker adapted model set on basis of hyper parameters of the corresponding speaker.

4. Method according to claim 3, **characterized in that**
- said hyper parameters comprise weights that determine the adaptation speed to adapt a certain individual model set to the corresponding speaker.

5. Method according to any one of the preceding claims, **characterized in that** an individual speaker adapted model set is adapted on basis of utterances of the corresponding speaker.

6. Method according to any one of the preceding claims, **characterized in that** the speech recognition is performed on basis of Hidden Markov Models.

## Patentansprüche

1. Verfahren zum Durchführen einer automatischen Spracherkennung, **gekennzeichnet durch**
- automatisches Detektieren einer Änderung des Sprechers;
- Identifizieren eines Sprechers; und
- Verwenden eines individuellen Modellsatzes, welcher angepasst ist an den identifizierten Sprecher, für den Spracherkennungsablauf, falls der individuelle Modellsatz verfügbar ist,
- ansonsten, Neuerzeugen eines solchen an einen individuellen Sprecher angepassten Modellsatzes für den Sprecher, und
- Hinzufügen eines entsprechenden neuen Modellsatzes zu dem System;
- wobei der neu erzeugte an einen individuellen Sprecher angepasste Modellsatz auf Basis eines sprecher-unabhängigen Modells generiert wird.

2. Verfahren gemäß Anspruch 1, **gekennzeichnet durch**
- Umschalten zu einem angepassten individuellen Modellsatz für den identifizierten Sprecher, falls dieser Modellsatz existiert, und
- weiteres Anpassen des entsprechenden angepassten individuellen Modellsatzes für den identifizierten Sprecher.

3. Verfahren gemäß Anspruch 1 oder 2, **gekennzeichnet durch**
- Speichern von Hyper-Parametern zusammen mit dem individuellen Modellsatz für einen bestimmten Sprecher, wobei die Hyper-Parameter notwendig sind zur Anpassung, so dass die Anpassung fortfahren kann und nicht wiedergestartet werden muss, wenn der gleiche Sprecher das System wieder verwendet,
- Anpassen des an einen individuellen Sprecher angepassten Modellsatzes auf Basis von Hyper-Parametern des entsprechenden Sprechers.

4. Verfahren gemäß Anspruch 3, **dadurch gekennzeichnet, dass**
- die Hyper-Parameter Gewichte umfassen, die die Anpassungsgeschwindigkeit festlegen zur Anpassung eines bestimmten individuellen Modellsatzes an den entsprechenden Sprecher.

5. Verfahren gemäß einem der vorstehenden Ansprüche, **dadurch gekennzeichnet, dass** ein an einen individuellen Sprecher angepasster Modellsatz auf Basis von Äußerungen des entsprechenden Sprechers angepasst wird.

6. Verfahren gemäß einem der vorstehenden Ansprüche, **dadurch gekennzeichnet, dass** die Spracherkennung

## Revendications

1. Procédé permettant d'effectuer une reconnaissance automatique de la parole, **caractérisé en ce qu'**il comprend les opérations suivantes :
détecter automatiquement le changement du locuteur ;
identifier un locuteur ; et
utiliser un ensemble de modèles individuels adaptés au locuteur identifié pour la procédure de la reconnaissance de la parole, si ledit ensemble de modèles individuels est disponible,
sinon, créer, de manière nouvelle, un tel ensemble de modèles adaptés à un locuteur individuels pour ledit locuteur, et
ajouter un nouvel ensemble respectif de modèles au système,
où l'ensemble de modèles adaptés à un locuteur individuels nouvellement créé est créé sur la base d'un modèle indépendant du locuteur.

2. Procédé selon la revendication 1, **caractérisé en ce qu'**il comprend les opérations suivantes :
commuter sur un ensemble de modèles individuels adaptés pour le locuteur identifié, s'il existe, et
adapter encore l'ensemble de modèles individuels adaptés respectif pour le locuteur identifié.

3. Procédé selon la revendication 1 ou 2, **caractérisé par** les opérations suivantes :
stocker des hyperparamètres en même temps que ledit ensemble de modèles individuels pour un locuteur particulier, où lesdits hyperparamètres sont nécessaires pour l'adaptation, de façon que l'adaptation puisse se poursuivre et n'ait pas a être redémarrée lorsque le même locuteur utilise de nouveau le système,
adapter ledit ensemble de modèles adaptés à un locuteur individuels sur la base d'hyperparamètres du locuteur correspondant.

4. Procédé selon la revendication 3, **caractérisé en ce que** lesdits hyperparamètres comprennent des facteurs de pondération qui déterminent la vitesse d'adaptation afin d'adapter un certain ensemble de modèles individuels au locuteur correspondant.

5. Procédé selon l'une quelconque des revendications précédentes, **caractérisé en ce que** l'on adapte un ensemble de modèles adaptés au locuteur individuels sur la base des prononciations du locuteur correspondant.

6. Procédé selon l'une quelconque des revendications précédentes, **caractérisé en ce que** la reconnaissance de la parole s'effectue sur la base de modèles de Markov cachés.
